# EUROPEAN PATENT APPLICATION

(11) **EP 4 542 874 A1**
(43) Date of publication of application: **23.04.2025**
(21) Application number: 23204081.6
(22) Date of filing: 17.10.2023
(51) Int. Cl.: H04B 7/06, G06N 3/08, H04B 7/08

(54) **WIRELESS BEAM CONFIGURATION**

(71) Applicant: Robert Bosch GmbH, 70442 Stuttgart (DE)
(72) Inventor: Gherekhloo, Soheil, 74348 Lauffen Am Neckar (DE); Fellhauer, Felix, 70499 Stuttgart (DE); Shrivastava, Rudraksh, 74391 Erligheim (DE); Stark, Maximilian, 20249 Hamburg (DE)

(57) **Abstract**

According to a first aspect, there is provided a first radio device (UE1) for radio communication with at least a second radio device (gNB), comprising: a radio interface (22) configured to transmit and receive radio signals via a beamforming antenna arrangement (23), wherein the beamforming antenna arrangement (23) is configurable into a plurality of antenna patterns , wherein each antenna pattern is defined by corresponding initial beam configuration data comprised in a memory (21) of the first radio device (UE1); and a processor (20) configured to: receive beam training data (P) from the second radio device (gNB); to obtain beam configuration data (P') of the first radio device (UE1) by updating at least one of the records of the initial beam configuration data (U) based on the beam training data received (P) from the second radio device (gNB); to configure the radio interface (22) to transmit using at least one antenna pattern based on the at least one record of the beam configuration data (P'); and to perform, via the radio interface (22), a beam training process with at least the second radio device (gNB), wherein the radio interface is configured using the at least one antenna pattern of the beam configuration data as part of the beam training process.

## Description

### Technical Field

Aspects of the present specification relate to first and second radio devices, associated methods, a communication system, and a computer program element.

### Background

Beamforming is a well-established method to improve the directivity and sensitivity of a radio link between sender and receiver using omnidirectional antennas. Proposed systems being standardised by the third-generation partnership Project (3GPP) such as fifth-generation new radio (5G NR) contain options in which user equipment (UE) and Next Generation node base stations (gNB) establish highly directional transmission links in the millimetre wave region (broadly speaking, above 30 GHz and specifically around the water absorption peak at 60 GHz.

Directional links require good alignment of the transmitter and receiver beams, achieved through a process collectively referred to as beam management. Performing initial access (to establish a connection between a UE and a gNB) and providing continuous beam tracking for connected UEs and gNBs involves establishing and maintaining a codebook of beams that each UE in a communications network can use to communicate with a gNB. Similar considerations exist when a plurality of UEs communicate in a millimetre wave side channel, as may be provided in the V2X standard, for example. Therefore, beam discovery and tracking techniques may be further improved.

### Summary

According to a first aspect, there is provided a first radio device for radio communication with at least a second radio device. The first radio device comprises a radio interface configured to transmit and receive radio signals via a beamforming antenna arrangement. The beamforming antenna arrangement is configurable into a plurality of antenna patterns. Each antenna pattern is defined by corresponding initial beam configuration data comprised in a memory of the first radio device. The first radio device further comprises a processor configured to receive beam training data from the second radio device, obtain beam configuration data of the first radio device by updating at least one of the records of the initial beam configuration data based on the beam training data received from the second radio device, configure the radio interface to transmit using at least one antenna pattern based on the at least one record of the beam configuration data, and perform, via the radio interface, a beam training process with at least the second radio device, wherein the radio interface is configured using the at least one antenna pattern of the beam configuration data as part of the beam training process.

An effect is that the usage of a codebook (initial beam configuration data) allows a reduction in the complexity of beam training, for example, a simplification of the search space, compared to searching infinite beam space. The improvement, or optimization, of the codebook allows an increase in the performance of aspects of the beam training. As examples, faster training and/or better matches of selected beams results.

The theoretically infinite number of transmit and receive directions that may be selected by the first or second radio device for transmission or reception is significantly reduced. The complex problem of finding the best combination of transmit and receive beams is simplified.

Therefore, the time to find effective transmit and receive directions at first and second radio devices is reduced. In other words, adaption of the initial beam configuration data according to various scenarios is enabled, and thus performance in these scenarios enhanced. The energy required to be dissipated by processing circuitry when establishing or tracking the best set of beams between first and second radio devices is reduced.

In particular, various forms of additional information is exchanged between the second radio device (for example, a base station, access point, or gNB) and the first radio device (for example, a UE). The additional information is exchanged at least prior to beam training. The additional information enables the first radio device to reduce the number of beams to be searched and/or better match the searched beams in a beam training process between the first radio device and the second radio device before the beam training process is initiated. Of course, this technique is applicable both during initial association of the first radio device and the second radio device, and during periodic updates to reduce the complexity of beam tracking.

As an example, the second radio device can provide beam training data comprising beam preselection data. The beam preselection data can comprise information characterising the physical environment in which the first and second radio devices operate. For example, the second radio device may, in examples, be configured with a camera having a field of view over the area comprising the second radio device and the first radio device. The second radio device may be configured to identify, using the camera, areas in which a blocker drastically increases the path loss of the transmitter or reduces the sensitivity of a receiver, respectively. The second radio device can then designate, for example, angular sections of the field of view that the first radio device should not attempt to establish beams within when communicating with the second radio device. The first radio device may receive such beam training data and update an initial beam configuration of the first radio device so that in a subsequent beam training process between the first radio device and the second radio device, beams between the first and second radio devices that may experience high path loss, high multi-path propagation or sensitivity reduction owing to the blocker identified by the second radio device are not included, or are de-prioritised, in beam configuration data (in an example, a beam codebook). The omission, or the de-prioritisation of the less desirable beams from the beam configuration data reduces the search space of a generic beam training process.

According to a second aspect, there is provided a second radio device for communication with at least a first radio device. The second radio device comprises a radio interface configured to transmit and receive radio signals, and a processor configured to transmit beam training data to the first radio device, to receive, from at least the first radio device, data as part of a beam training process between the first and second radio devices; and to update the beam training data based on the data received as part of the beam training process.

According to a third aspect, there is provided a communication method of a first radio device for radio communication with at least a second radio device, comprising:
- receiving, at the first radio device, beam training data from the second radio device;
- obtaining beam configuration data of the first radio device by updating at least one of the records of the initial beam configuration data based on the beam training data received from the second radio device;
- configuring the radio interface to transmit using at least one antenna pattern based on the at least one record of the beam configuration data; and
- performing, via the radio interface, a beam training process with at least the second radio device, wherein the radio interface is configured using the at least one antenna pattern of the beam configuration data as part of the beam training process.

According to a fourth aspect, there is provided a communication method of a second radio device for radio communication with at least a first radio device, comprising:
transmitting beam preselection information and/or computer readable instructions comprising an executable beam preselection process to a first radio device;
receiving, from at least the first radio device, data as part of a beam training process between the first and second radio devices;
updating the beam preselection information and/or computer readable instructions comprising an executable beam preselection process based on the data received as part of the beam training process.

According to a fifth aspect, there is provided a communication system comprising a first radio device according to the first aspect, or its embodiments, and a second radio device according to the second aspect, or its embodiments.

According to a sixth aspect, there is provided a computer program element which, when executed by a processor, is configured to perform the method of the third and/or fourth aspects, or their respective embodiments.

According to a seventh aspect, there is provided a computer readable medium comprising instructions which, when executed by a processor, cause the processor to carry out the method of the second aspect.

In the following specification, the term "beam training" defines the process of selecting one or more radio transmit and/or receive beams between at least two radio devices. The use of machine learning for the beam training stage is not essential. A skilled person appreciates that in the field of communications, "beam training" refers to any iterative process of testing the path loss and/or other metric between a plurality of beamforming antennas and at least one other antenna. Therefore, information that can affect the final ranking of beams can be considered "beam training data". The beams that are ranked can comprise transmit beams, receive beams, or combinations of transmit and receive beams.

However, this specification does discuss an embodiment in which a machine learning model is transmitted from a first to at least a second radio device. This machine learning model can be used to reorder or to reduce the size of a code book used in a subsequent beam training step. The subsequent beam training step may be according to a prior art technique. Because the reordering or reduction of the size of the codebook used in the subsequent beam training step can also be performed using information transmitted from at least the second radio device to the first radio device, the application of a machine learning model to perform the reordering or reduction of the size of the codebook is one option and is not essential.

### Brief Description of the Drawings

Exemplary embodiments are depicted in the figures, which are not to be construed as limiting the claims, and are explained in greater detail below. Where possible, like reference numerals denote analogous or like features in different figures.
- Fig. 1: schematically illustrates a beam training problem.
- Fig. 2: schematically illustrates a beam training method.
- Fig. 3: schematically illustrates a physical environment comprising a plurality of radio devices.
- Fig. 4: schematically illustrates an example of a first radio device according to the first aspect.
- Fig. 5: schematically illustrates an example of a second radio device according to the second aspect.
- Fig. 6: schematically illustrates an example of removing records of a beam data structure based on training data.
- Fig. 7: schematically illustrates signalling according to a first example of the first aspect.
- Fig. 8: schematically illustrates signalling according to a second example of the first aspect.
- Fig. 9: schematically illustrates a communication method of a first radio device.
- Fig.10: schematically illustrates a communication method of a first radio device.

### Detailed Description

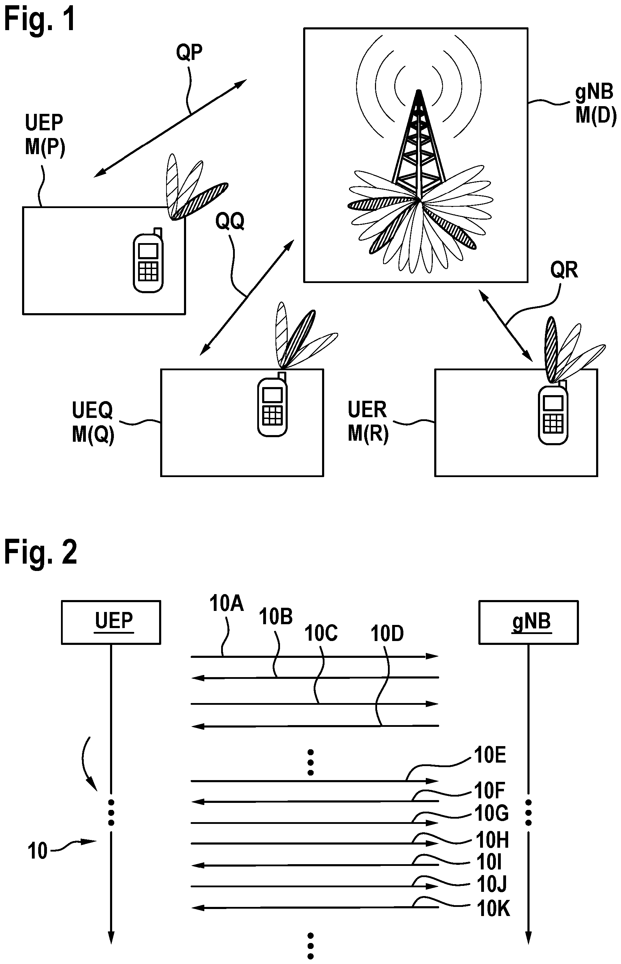

Fig. 1 schematically illustrates a beam training problem.

A conventional beam training problem involves the user equipment UEP, UEQ and UER and the base station gNB. The antennas of the respective items of user equipment UEP, UEQ and UER each comprise beamforming antennas. The base station gNB comprises a beamforming antenna. Especially in the high frequency domain (above 30 GHz) user equipment and base stations are capable of forming beams by means of configuring their antenna arrays. Typically, the beams that can be formed are a discrete number on both sides. Thus, a discrete problem of optimisation exists according to the challenge of selecting the best beam, or beams, out of a combination of beams for data communication. UEP may probe the channel according to a method M(P), obtaining quality information QP. UEQ may probe the channel according to M(Q), obtaining quality information QQ. UER may probe the channel according to M(R), obtaining quality information QR. Quality information can be derived while receiving signals either at gNB side, when transmitted by a UE, or on UE side, when transmitted by a gNB. Respective quality information can be derived using different methods, like signal strength, or capacity, or delay spread, etc.. The base station gNB may manage the process of determining the quality metrics according to a method M(D).

Fig. 2 schematically illustrates a beam training method.

One method to simplify the complexity of the problem of Fig. 1 uses data records storing the transmission direction information of one or more beams of a UE or gNB. These records are referred to as codebooks. A codebook defines a discrete set of antenna configurations. Consequently, only a limited number of combinations of transmit and receive codebook entries have to be evaluated when searching for the best combination of transmit and receive codebook entries for communication. Based on the communication system concept of Fig. 1, Fig. 2 schematically illustrates a beam training method.

In particular, UEP may apply a codebook search method M(A) on codebook U. Base station gNB may apply a codebook search method M(D) on codebook V. At step 10A, UEP transmits training data using beam 1 from codebook U, denoted U(1). At step 10B, the gNB transmits feedback quality information of the training data transmitted to the gNB by UEP using U(1). The direct feedback of quality information by U(1) illustrated by step 10B is one implementation option. However, without loss of generality, an arbitrary number of beams can be tested in an arbitrary sequence. The feedback information can, furthermore, be transmitted by the gNB to the UE as a unitary whole, or in a plurality of arbitrary portions of the total number of beams tested. This example continues with the case of feedback of quality information based on one beam.

At step 10C, UEP transmits training data to gNB on beam U(2). At step 10D, gNB feeds back quality information of the training data transmitted by UEP using U(2). At step 10E, UEP transmits training data to gNB on beam U(n). At step 10F, gNB feeds back quality information of the training data transmitted by UEP using U(N). UEP then performs a codebook search method M(A) to determine the best beam k in which to transmit data from UEP to gNB. Subsequently, UEP is configured to use beam k. At step 10H, communication data is transmitted from UEP to the gNB using U(k). At step 101, gNB sends an acknowledgement to UEP. The description until this point may refer to beam selection operations needed for establishing or associating UEP with gNB. Steps 10J and 10K refer to a repeat of the previously outlined procedure applied during a beam tracking procedure, for example.

The foregoing description of Fig. 2 is a simplified visualisation of the beam training procedure. In particular, in the sequence diagram 10 of beam training is illustrated in respect of the UEP side, but a similar technique can also be applied at the gNB side. UEP repeatedly sends training data to the gNB using multiple beams out of codebook U. gNB thus replies with quality information that is derived from the received training data and allows UEP to select the best beam k out of U to be used for communication.

The problem can be further simplified according to a multistage approach. During the first phase, the receiving portion gNB of the link can use a wide beam, or even an omnidirectional beam. In this case, the number of combinations U(n) to be tested is limited. Based on the tested beams, a subset of the beam combinations limited to specific sectors of the transmit antenna can be tested, preselected based on the results of the first test phase.

Generally, these approaches rely on feedback information to select the best beam on each side. Thus, a metric has to be exchanged or fed back, allowing each device locally to make its local decisions concerning firstly which beams test, and secondly which beams to select at the end of the procedure. This interface is standardised so that each UE or gNB can perform beam selection appropriately.

A conference publication discussing these approaches is "Low-Complexity Beam Training for Tracking Spatially Consistent Millimeter Wave Channels" by Narengerile, F. Alsaleem, J. Thompson and T. Ratnarajah, in 2020 IEEE 31st Annual International Symposium on Personal Indoor and Mobile Radio Communications, 2020, pp. 1-6, doi: 10.1109/PIMRC48278.2020.9217328.

Another conference publication discussing it approaches is "Low complexity beamforming training method for mmWave communications" by F. Fellhauer, N. Loghin, D. Ciochina, T. Handte and S. ten Brink, in 2017 IEEE 18th International Workshop on Signal Processing Advances in Wireless Communications (SPAWC), 2017, pp. 1-5, doi: 10.1109/SPAWC.2017.8227683.

However, this partitioning of functionality allows only a minimal level of exchange of information related to beam training in between two radio devices that intend to initiate or adjust a communication channel.

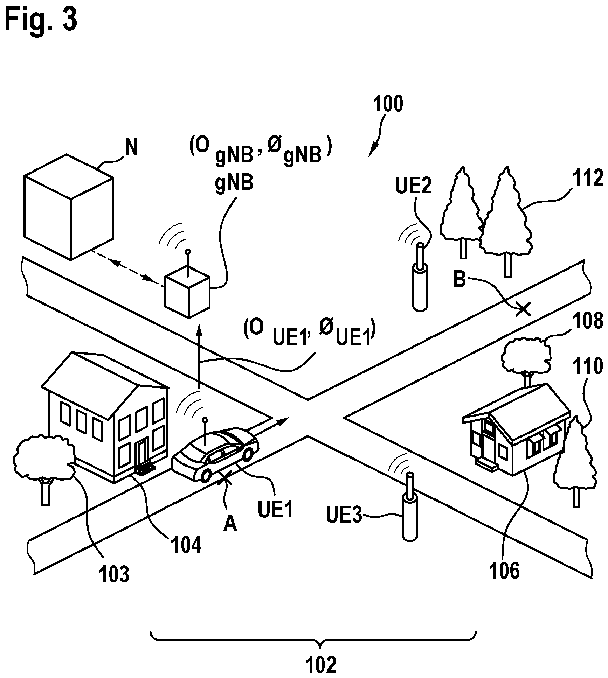

Fig. 3 schematically illustrates a physical environment comprising a plurality of radio devices.

The communication system 100 illustrated by the physical environment 102 at a given timestep includes, for example, an urban scenario comprising urban dwellings 104, 106, and trees and vegetation 103, 112, 108, 110. In this scenario, a vehicle comprising a first radio device UE1 at location A is travelling towards location B. A second radio device gNB is comprised in a base station, for example. The second radio device gNB is communicatively coupled to a network controller N which may, in an example, host a location tracking service, for example. A third radio device UE2 and a fourth radio device UE3 are also comprised in roadside units, for example.

In this context, sensing of the physical environment 102 can be provided to address a range of sensing use cases. The first radio device UE1 comprised in the vehicle can detect spatial information about the range, position, velocity of other vehicles or obstacles on the road surrounding the vehicle comprising the first radio device UE1. This information can be used by the vehicle for cruise control, parking guidance, or collision avoidance, for example. Static radio devices, for example the third radio device UE2 and the fourth radio device UE3 can detect spatial information about traffic density or line of sight signal blockers to other radio devices in the physical environment 102.

Relative to a coordinate frame of the vehicle A, first radio device UE1 is configured to transmit according to a plurality of beams directionalised according to polar coordinates (*θ*_{*UE*1}, *ϕ*_{*UE*1}). Relative to a coordinate frame of the base station gNB, the gNB is configured to transmit according to a plurality of beams directionalised according to polar coordinates (*θ*_{*GNB*1}, *ϕ*_{*GNB*1}). At millimetre wave frequencies and in a given physical environment 102, beam paths enabling low path loss (or high sensitivity) between UE1 and gNB include the line of sight path (if extant), but also reflections from the ground or buildings.

To efficiently exploit local properties of communication channels to optimise beam training, the present specification proposes to use historical and/or spatial information to improve beam training. For example, in one embodiment a gNB can learn how its users or subscribers move through the coverage area of the gNB. Alternatively, the gNB can be provided with information about spaces having high spatial user density. Since the only stationary device within a cellular system is the base station gNB, and typically no interface exists, other than to exchange beam quality information that goes beyond a specific instance of a training procedure, the mobile user equipment UE cannot make use of these properties.

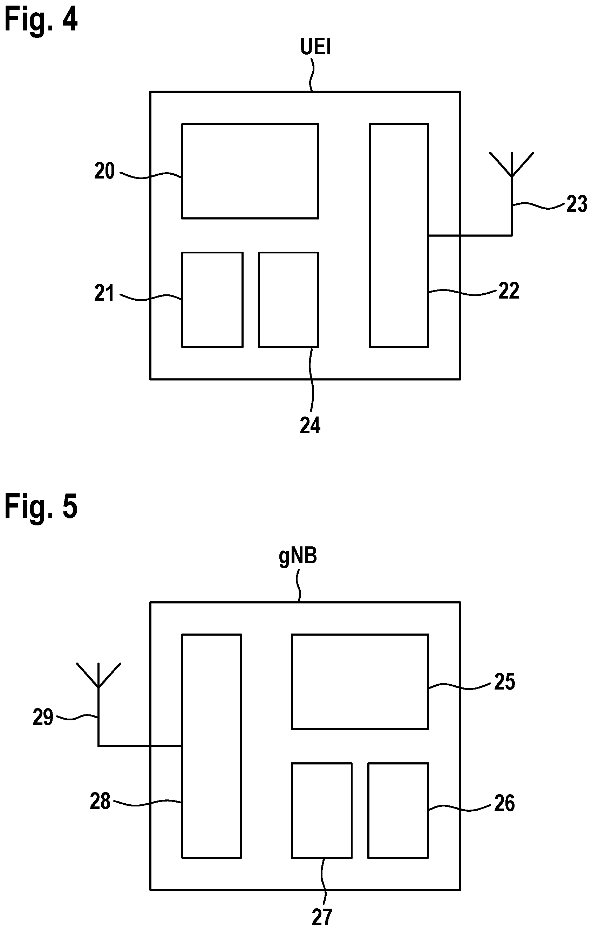

Fig. 4 schematically illustrates an example of a first radio device according to the first aspect.

According to an example, the radio interface 22 is configured to communicate in a transmission mode. In an example, radio interface 22 is configured to transmit above 30 GHz, or above 50 GHz. According to an example, the radio interface may be configured to use mmW modes of fifth generation wireless mobile communication technologies (5G) such as 5G N R. According to another example, radio interface may be configured to use direct V2X, which includes V2V, V2I, and V2P in the ITS 5.9 gigahertz (GHz) spectrum. According to another example, the radio interface 22 mode includes mobile broadband systems and technologies, such as fourth generation wireless mobile communication technologies 4G such as LTE, LTE-Advanced systems, mobile WiMAX, IEEE 802.11ad or IEEE 802.11ay. The radio interface 22 may, for example, coordinate radio communications from one or more radio systems at different frequencies, such as cellular frequencies (around 900 MHz), Wi-Fi frequencies (around 2.4 or 5 GHz), or millimetre wave frequencies (such as 57-64 GHz).

Therefore, the first radio device UE1 (and other radio devices gNB, UE2-4 discussed herein) may utilize orthogonal frequency-division multiplexing (OFDM) with a cyclic prefix (CP) on the uplink (UL) and downlink (DL). In an example, the first radio device UE1 may communicate using a single carrier (SC) modulation scheme.

The radio interface 22 of the first radio device Is configured to generate a plurality of antenna patterns *θ*_{*UE*1}, *ϕ*_{*UE*1}, wherein each antenna pattern is defined by corresponding initial beam configuration data U or V comprised in a memory 21 of the first radio device UE1. In an example, analogue beamforming in the radio interface 22 can be implemented using a network of digitally controlled phase shifters, providing the ability to finely tune the beams and steer nulls. In another example, the radio interface 22 may apply a hybrid analogue-digital precoding and combining architecture to generate a plurality of beams. According to an example, a digital precoding technique may be used to generate a plurality of beams.

In some embodiments, at least one of the radio devices is user equipment UE. In some examples, the user equipment UE is incorporated in one, or more, of a smartphone, a smart tablet, non-autonomous, autonomous, or semi-autonomous vehicles such as an automobile, bus, aircraft, bicycle, e-bicycle, drone, boat, tram, train, and the like.

According to an example, the first radio device UE1 comprises a volatile and/or non-volatile memory 21 configured to store, for example, a computer program element. According to example, the antenna 23 is a beamforming antenna.

According to an example, the first radio device UE1 comprises a beam training data unit 24. The beam training data unit 24 is configured to monitor the environment of the first radio device UE1 using sensors available at the first radio device UE1 and transmit beam training data to, for example, a second radio device gNB.

Fig. 5 schematically illustrates an example of a second radio device according to the second aspect.

In some embodiments, the second radio device gNB is a base station gNB such as a NodeB, an eNB, an access point (AP), a New Radio base station (NR BS), a 5G NodeB (NB), or a Next Generation NodeB (gNB). According to an example, the antenna 29 is a beamforming antenna.

The radio interface 28, antenna 29, processor 25, memory 27 comprised in the second radio device gNB are analogous to those described in respect of the first radio device UE1 such that the description will not be repeated.

The present specification proposes to improve beam training by exchanging additional beam training data P before, or during, the beam training process. In a first variant, the beam training scheme obtains beam training data P, from the second radio device gNB, about the codebook or beams that the first radio device UE1 should test. This is referred to as an information assisted beam training method. The beam training data P may, for example, contain information about the location of blockers in the local environment containing UE1 and the gNB.

According to a first aspect, there is provided a first radio device UE1 for radio communication with at least a second radio device gNB. The first radio device UE1 comprises a radio interface 22 configured to transmit and receive radio signals via a beamforming antenna arrangement 23. The beamforming antenna arrangement 23 is configurable into a plurality of antenna patterns *θ*_{*UE*1}*ϕ*_{*UE*1}. Each antenna pattern is defined by corresponding initial beam configuration data U or V comprised in a memory 21 of the first radio device UE1.

The beamforming antenna arrangement 23 can be configured into a plurality of antenna patterns *θ*_{*UE*1},*ϕ*_{*UE*1} using either baseband signal processing techniques, RF beamforming, or a combination. In an example, the initial beam configuration data can comprise all possible beams within a codebook associated with the beamforming antenna arrangement 23. Alternatively, the initial beam configuration data can comprise a subset of all possible beams of the codebook. The beams defined in the initial beam configuration data may have an unequal spatial distribution relative to elevation *θ*_{*UE*1} and/or azimuth *ϕ*_{*UE*1}, for example.

The first radio device UE1 further comprises a processor 20 configured to receive beam training data P from the second radio device gNB. The processor 20 is configured to obtain beam configuration data of the first radio device UE1 by updating at least one of the records of the initial beam configuration data U based on the beam training data received P from the second radio device (gNB). Beam training data may be received from the second radio device gNB, for example, within the context of a predefined beam management operation. The process of obtaining beam configuration data from the beam training data P refers to reducing, or reordering, a data structure comprising the initial beam configuration data prior to performing any channel sensing using one or more of the beams comprised in the initial beam configuration data.

The processor 20 is configured to configure the radio interface 22 to transmit using at least one antenna pattern based on the at least one record of the beam configuration data.

The processor 20 is configured to perform, via the radio interface 22, a beam training process with at least the second radio device gNB, wherein the radio interface is configured using the at least one antenna pattern of the beam configuration data as part of the beam training process. The first radio device is optionally user equipment (UE).

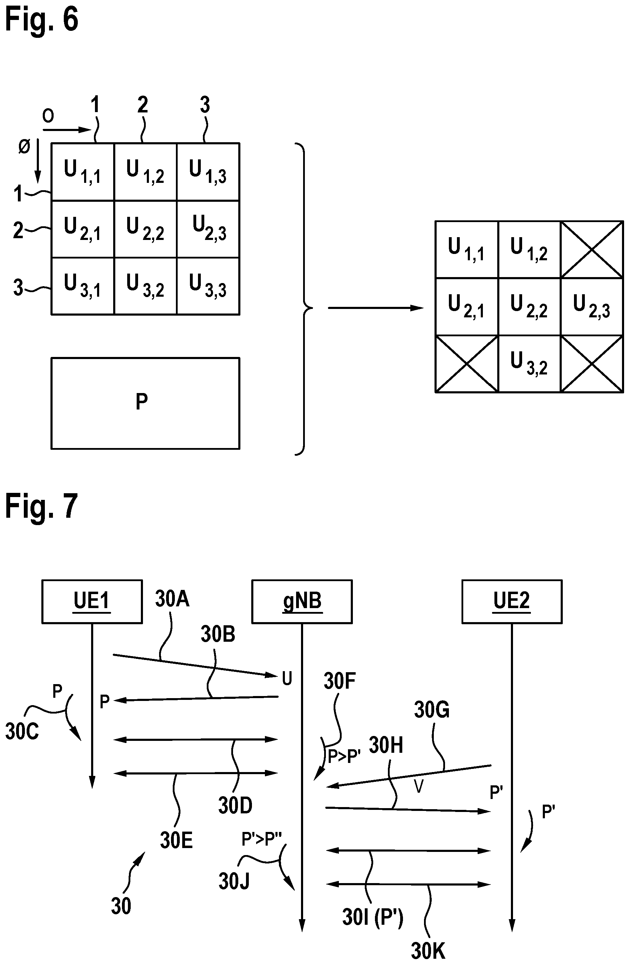

Fig. 6 schematically illustrates an example of removing records of a beam data structure based on beam training data P. In the example of Fig. 6, initial beam configuration data in the data structure can steer a beam of a radio device in nine different directions defined by elevation (θ) and azimuth (ϕ). Beam training data P received from the second radio device gNB causes the processor 25 of the gNB to remove beams U_{3,1}, U_{3,3}, and U_{1,3} from the beam data structure. Accordingly, the search space is significantly reduced. The beams may be removed, for example, based on historical and/or statistical and/or measured data. The data can comprise, for example, a sensitivity or path loss threshold where the threshold is not met in view of beam preselection data comprised in the beam training data P.

According to an embodiment, the processor 20 is configured to obtain, from a higher layer, communication data to be transmitted from the first radio device UE1 to the second radio device gNB, and/or another radio device in the communications network. The processor 20 provides the communication data to the radio interface 22 of the first radio device UE1. The radio interface 22 of the first radio device UE1 transmits the communication data to the second radio device gNB, and/or another radio device in the communications network on one of the beams defined in the beam configuration data.

According to an embodiment, the processor 20 of the first radio device UE is configured, prior to receiving the beam training data from the second radio device gNB, to transmit the initial beam configuration data U to the second radio device gNB prior to receiving the beam training data P at the first radio device UE1. According to this embodiment, the second radio device gNB is able to tailor the beam training data to the particular beamforming capabilities of the first radio device UE1.

### Information Assisted preselection of beams:

According to an embodiment, the first radio device U E1 receives, from the second radio device gNB, beam training data P that assists the processor 20 of the first radio device UE1 to preselect the beams to be tested in a subsequent beam training phase between the first and second radio devices. The beam training data P is any information that the processor 20 of the first radio device UE1 can use to infer the need for a reduction or reordering of the priority of beam entries in the initial beam configuration data U, to thus reduce the beam search space of a subsequent beam training phase. A second radio device gNB comprises a beam training data unit 26. The beam training data unit 26 of the second radio device gNB is used to generate the beam training data P (beam preselection data or computer executable instructions capable of performing an executable beam preselection process) at the second radio device gNB before transmitting it to the first radio device UE1. For example, the beam training data unit 26 of the second radio device gNB may obtain environmental measurements from a camera located in the second radio device gNB. According to another option, the beam training data unit 26 of the second radio device gNB may select one of a plurality of executably beam training routines to transmit to the first radio device UE1 based on an assessment of environmental measurements at the second radio device gNB.

Fig. 7 schematically illustrates signalling 30 according to a first example of the first aspect. The signalling 30 is defined in a sequence diagram of a beam training method, in this example formed between a second radio device gNB implemented as a base station, and a first radio device UE1 and a third radio device UE2. In the example of Fig. 7, the first radio device UE1 and a third radio device UE2 are implemented as user equipment. The beam training data P transmitted from the second radio device gNB to the first radio device UE1 and a third radio device UE2 comprises beam training data P. The beam training data P is in, the example of Fig. 7, beam preselection data. In this in this example, the beam preselection data P is an exchanged parameter set that is maintained, optimised, and provided by the second radio device gNB.

In step 30A, an optional step of transmitting initial beam configuration data U to the second radio device gNB prior to receiving the beam training data P back from the second radio device gNB at the first radio device UE1 is performed. According to this embodiment, the second radio device is able to synchronise the initial beam configuration data U of the first radio device UE1 prior to beginning the updating of the initial beam configuration data at the first radio device UE1. Therefore, the second radio device gNB is capable of adjusting the beam training data P (in this case, beam preselection data P) transmitted from the second radio device gNB to the first radio device UE1 to suit the initial beam configuration data.

The first radio device UE1 provides beam configuration data "U" (in one example, codebook information) to the second radio device gNB. Therefore, the first radio device UE1 has prior knowledge of the information that the second radio device gNB will use to select the beams for testing the channel.

In step 30B, the second radio device gNB provides beam training data P (in this case, beam preselection data P) (training parameters) to the first radio device UE1. If beam configuration data U has been provided to the second radio device gNB, the beam training data P (in this case, beam preselection data P) is based on "U".

In step 30C, use of the beam training data P (in this case, beam preselection data P) to optimise the initial beam configuration data U leads to a reduction in the search space in a beam training phase 30D.

For example, in step 30C, the first radio device UE1 computes one or more pilots (a specific combination of beams) based on beam training data P (in this case, beam preselection data P). In step 30D, the first radio device UE1 transmits the pilots to the second radio device gNB. Optionally, the first radio device UE1 may perform retransmissions of the pilots, for example to retransmit the pilots to the second radio device gNB in an arbitrary order.

According to an embodiment, step 30D is performed during a beacon transmission interval BTI of an IEEE 802.11ad or IEEE 802.11ay communication system. According to an embodiment, step 30D is performed during one of an SS interval, PBCH interval, CSI-RS interval, SRS interval as defined in the 3GPP NR standard.

In step 30E, the first radio device UE1 and the second radio device gNB communicate in one or more of an uplink, downlink, or duplex communication wherein the radio interface is configured using the at least one antenna pattern of the beam configuration data obtained as part of the beam training process. After performing the beam training step between the first radio device UE1 and the second radio device UE2, an evaluation metric between the first radio device UE1 and the second radio device gNB will be relatively good. For example, the beam training process enables discovery of at least one path between the first radio device UE1 and the second radio device gNB having a relatively good evaluation metric. The evaluation metric may be, for example, SNR, SINR, and/or Channel Capacity.

According to an embodiment, step 30E is performed when the second radio device gNB has scheduled a RACH opportunity (5G NR) based on the best direction defined using the at least one antenna pattern of the beam configuration data obtained as part of the beam training process.

In step 30F, the one or more pilots are received by the second radio device gNB. The second radio device gNB evaluates the pilots transmitted by the first radio device UE1. The second radio device gNB performs beam training by providing feedback in step 30E to the first radio device UE1. During this process, the second radio device gNB attempts to improve the beam training data, P, towards P'.

Therefore, compared to the process shown in Fig. 2, the initial beam configuration data U (such as a beam codebook) is updated based on environmental information, for example, received from the second radio device gNB as beam training data P (in this case, beam preselection data P). In general, the reordered or optimised beam configuration data leads to the first radio device UE1 and/or the second radio device gNB transmitting a smaller number of beams to reach an optimized result, thus saving energy, and improving latency.

For example. in step 30F, the beam training data P held by the second radio device gNB is optionally updated based on the beam configuration data U . For example, in a separate transmission the first radio device UE1 may transmit the beam configuration data U to the second radio device gNB. This enables the second radio device gNB to maintain an updated set of beam training data P including results not only from an executable beam preselection process (based for example on environmental information) but also on the results of a real beam training process between the first radio device UE1 on the second radio device gNB.

Fig. 7 now proceeds to describe the use of beam preselection information further comprising at least one temporal, spectral, and/or spatial beam selection rule defining a second beam for use at a second time based on the selection of a first beam at a preceding first time. In other words, the optimised beam configuration data obtained in steps 30A-30F can be used to update initial beam configuration data V of a third radio device UE2 in a communication system. However, a skilled person would understand that steps 30A-30F stand alone, and the configuration of initial beam configuration data V of a third radio device UE2 Is not essential.

In an optional sequence 30G to 30K, the beam training process may be repeated between the second radio device gNB and a third radio device UE2. In this case, the beam training process applies the beam training data P' computed by the second radio device gNB during the beam training process with the first radio device UE1 to a subsequent beam training process with the third radio device UE2. This may yield a subsequent set of training data, P", at the second radio device gNB that can, in its turn, be used for successive beam training operations with third radio devices, or the first radio device UE1.

In step 30G, an optional step of transmitting initial beam configuration data V to the second radio device gNB from the third radio device UE2 prior to receiving the updated beam training data P' at the third radio device UE2 is performed. According to this embodiment, the second radio device gNB is able to adapt the initial beam configuration data V of the second radio device UE2 prior to beginning the updating of the initial beam configuration data V at the third radio device UE2. For example, the adaptation of the updated beam training data P' into the coordinate system of the third radio device UE2 is performed. Therefore, the second radio device gNB is capable of adjusting the updated beam training data P' transmitted from the second radio device gNB to the third radio device UE2 to suit the initial beam configuration data V.

In other words, this represents a combined signalling scheme involving a temporal relation of tested or selected beams. For example, the information that first radio device UE1 has selected a beam with direction "A" not the first-time instance, leads to the third radio device UE2 selecting "A+delta" as the best beam after a given time step.

In step 30H, the second radio device gNB transmits updated beam training data P' to the third radio device UE2. The updated beam training data P' enables the third radio device UE2 to reduce or reorder at least one of the records of the initial beam configuration data V based on the updated beam training data P' received from the second radio device (gNB).

In step 30I, the second radio device gNB and the third radio device UE2 perform a further beam training procedure, optionally using beam configurations derived using, at least in part, the updated beam training data P'.

In step 30J, the updated beam training data P' is used to obtain further beam training data during a beam optimization process between the second radio device gNB and the third radio device UE2 based on beams defined in the updated beam training data P'. In other words, at 30J, the further beam training data is derived from feedback information received at step 30I.

Optionally, in step 30J, the updated beam training data P' held by the second radio device gNB updated using the beam training data P" computed at the second radio device gNB. For example, in a separate transmission the second radio device gNB may transmit the beam training data P" to the third radio device UE2. This enables the second radio device gNB to maintain an updated set of beam training data P" including results not only from an executable beam preselection process (based for example on environmental information) but also on the results of a real beam training process between the third radio device UE2 the second radio device gNB.

In step 30K, the second radio device gNB and the third radio device UE2 communicate wherein the radio interface of the third radio device UE2 is configured using the at least one antenna pattern of the updated beam configuration data.

A skilled person will appreciate that the foregoing discussion has considered the updating of initial beam configuration data U at the first radio device UE1 in a downlink direction from the second radio device gNB. The foregoing process may be repeated an uplink direction, with the second radio device gNB updating its initial beam configuration data based on beam training data received from a first radio device UE1. In this connection, the first radio device UE1 can also comprise a beam training data unit 24. The beam training data unit 24 of the first radio device UE1 is configured to monitor the environment 102 of the first radio device UE1 using sensors available at the first radio device UE1, and/or by using a network connection to obtain information about the environment of the first radio device UE1. Accordingly, the signal sequence diagram illustrated in Fig. 7 can be inverted such that the first radio device UE1 provides beam configuration data to the second radio device gNB In an uplink direction.

According to an embodiment, a mobile network operator can provision the second radio device gNB with predefined or learned information defining successful beam directions.

According to an embodiment, the beam training data P provided by the second radio device gNB can contain a full code book for the first radio device UE1. Here, the second radio device gNB is configured to generate an optimised or updated code book based on the initial beam configuration data provided by the first radio device UE1.

According to an embodiment, the beam training data P comprises beam preselection data. The processor 20 is further configured to generate the beam configuration data updating the initial beam configuration data U using the beam preselection data from the second radio device gNB.

According to an embodiment, the beam preselection data further comprises information characterising the environment 102 (environmental information) comprising the first UE1 and second radio devices gNB.

In an example, the environmental information comprises absolute or relative coverage gradients of the environment.

In an example, the environmental information comprises and/or scenario information obtained by the second radio device gNB.

In an example, the beam preselection data further comprises information characterising the position of the second radio device gNB relative to the first radio device UE1. In an example, the beam preselection data further comprises the velocity between the first UE1 and second gNB radio devices.

In an example, the beam preselection data comprises information characterising candidate beam configuration data comprising at least one of an absolute or relative beam direction, a beam likelihood, or a beam training sequence.

In an example, the beam preselection data comprises at least one temporal, spectral, and/or spatial beam selection rule defining a second beam for use at a second time based on the selection of a first beam at a preceding first time.

### Instruction Assisted preselection of beams:

According to another embodiment, the actual beam training method (or a subset of it) that should be used by the first radio device UE1 for beam training is transmitted from the second radio device gNB to the first radio device UE1. Therefore, the feature "receive beam training data" includes receiving computer readable instructions comprising an executable beam preselection process. In other words, the second radio device gNB transmits a computer program or computer executable instructions to the first radio device UE1.

In an embodiment, the executable beam preselection process is instruction code or source code comprising an optimization algorithm capable of optimising or improving initial beam configuration data at the first radio device UE1 based on conditions known to the second radio device gNB. In an embodiment, the executable beam preselection process is a machine learning model trained based on conditions known to the second radio device gNB. The initial beam configuration data is applied to the machine learning model at the first radio device UE1, and at a later stage at the second radio device gNB side, thus improved or optimized beam configuration data can be derived based on an execution of the beam preselection process.

According to an embodiment, the beam preselection data comprises computer readable instructions comprising an executable beam preselection process transmitted from the second radio device gNB. The processor 20 is further configured to generate the beam configuration data by applying the executable beam preselection process to the initial beam configuration data and removing and/or reordering at least one of the corresponding records of the initial beam configuration data based on the feedback information exchanged with the first radio device UE1 during the beam preselection process. According to an embodiment, the exchanged information can be one or more of a neural network configuration, parameters of a selection or classification method such as a support vector machine, or a decision tree.

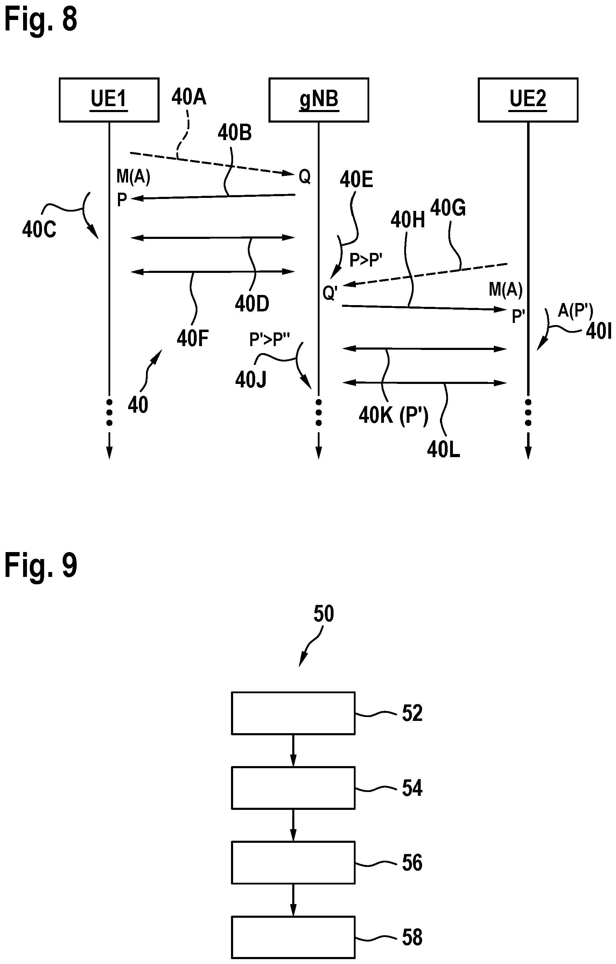

Fig. 8 schematically illustrates signalling according to a second example 40 of the first aspect. In Fig. 8, a sequence diagram of beam training between a second radio device gNB, a first radio device UE1, and a third radio device UE2 is illustrated. The second radio device gNB provides beam training data as computer-executable instructions of a beam training method A M(A) and/or parameters P to at least the first radio device UE1. Method A M(A) and parameters P are for beam training between at least the first radio device UE1 and the second radio device gNB. This allows the second radio device gNB to tailor the beam configuration data P' for communication between the first radio device UE1 and the second radio device gNB. According to an embodiment, the second radio device gNB can optimise beam configuration data Q based on previously completed training procedures, which can then in turn be used for later training procedures with a third radio device UE2.

In step 40A, the first radio device UE1 optionally communicates context information Q. In an example, the context information Q defines the state of the environment 102 around the first radio device UE1 as sensed by the beam training data unit 24 of the first radio device UE, for example. For example, the first radio device UE1 figured to provide information such as its processor type, antenna configuration, relative position and/or orientation to the second radio device gNB.

In step 40B, the second radio device gNB communicates beam training data (P, M) to the first radio device UE1. The beam training data (P, M) comprises at least computer readable instructions comprising an executable beam preselection process (M). The beam training data (P, M) may also comprise beam preselection data (P) to be processed by the executable beam preselection process M. The executable beam preselection process M maybe one, or a combination, of a trained machine learning model, a set of source code defining a beam training process configured to be executed by the processor of the first radio device UE1, or a lookup table configured to be accessed by the processor, wherein the processor applies the lookup table to generate or adapt the initial beam configuration data.

In step 40C, the processor of the first radio device UE1 is configured to use the executable beam preselection process M to process initial beam configuration data P.

In step 40D, beam training is performed in the downlink direction, uplink direction, or both directions between the first radio device UE1 and the second radio device gNB by executing computer readable instructions comprising the executable beam preselection process M(A) on the first radio device UE1. To perform beam training, for example, the radio interface 22 of the first radio device UE1 transmits a pilot signal or channel probe signal to the second radio device gNB using at least one antenna pattern based on the at least one record of the beam configuration data after updating the initial beam configuration data P (such as a beam codebook) based on the execution of the executable beam preselection process M(A) on the first radio device UE1. Therefore, compared to the process shown in Fig. 2, the initial beam configuration data P (such as a beam codebook) is updated based on an executable beam preselection process M(A) on the first radio device UE1.

In step 40E, the beam training data P held at the second radio device gNB is updated, using the feedback gained during 40D, resulting in optimised P'. In general, the reordered or optimised beam training data leads to the third radio device UE2 searching a smaller number of beams, thus saving energy, and improving latency.

In step 40F, the first radio device UE1 and the second radio device gNB communicate in one or more of an uplink, downlink, or duplex communication wherein the radio interface 22 is configured using the at least one antenna pattern of the beam configuration data Q obtained as part of the beam training process. The communication quality between the first radio device UE1 and the second radio device gNB will be relatively good adding to the been training process having discovered a path between the first radio device UE1 and the second radio device gNB having relatively good path loss and/or sensitivity. Communication quality is, for example, a metric comprising one, or a combination of any of channel capacity, data rate, reliability, signal-to-noise-ratio, signal-to-interference-noise-ratio, or similar.

In step 40G, the third radio device UE2 optionally communicates context information Q' of the third radio device UE2 to the second radio device gNB. In an example, the context information Q' defines the state of the environment 102 around the third radio device UE2 as sensed by a beam training data unit of the third radio device UE2, for example. For example, the third radio device UE2 is configured to provide information such as its processor type, antenna configuration, relative position and/or orientation to the second radio device gNB.

In step 40H, the second radio device gNB communicates beam training data (P', M(A)) to the third radio device UE2. In this embodiment, the beam training data (P', M(A)) comprises at least computer readable instructions comprising an executable beam preselection process (M(A)). The beam training data (P', M(A)) may also comprise beam preselection data (P') to be processed by the executable beam preselection process M(A). The executable beam preselection process M(A) may be one, or a combination, of a trained machine learning model, a set of source code defining a beam training process configured to be executed by the processor of the third radio device UE2, or a lookup table configured to be accessed by the processor, wherein the processor applies the lookup table to generate or adapt the initial beam configuration data Q.

In step 401, the processor of the third radio device UE2 is configured to use the executable beam preselection process M(A(P')) to process the initial beam configuration data Q (such as a codebook of the third radio device UE2). Therefore, the processor of the third radio device UE2 obtains beam configuration data optimized by the second radio device gNB by updating at least one of the records of the initial beam configuration data of the third radio device UE2 based on the beam training data P, M received from the first radio device UE1.

In steps 40J, 40K, beam training is performed in the downlink direction, uplink direction, or both directions between the third radio device UE2 and the second radio device gNB using the beam training data P' which has been obtained by executing computer readable instructions comprising the executable beam preselection process M(A) on the third radio device UE2. To perform beam training, for example, the radio interface of the third radio device UE2 transmits a pilot signal or channel probe signal to the second radio device gNB using at least one antenna pattern based on the at least one record of the beam configuration data after updating the beam training based on the beam training data P' obtained at the second radio device gN B by execution of the executable beam preselection process M(A) on the third radio device UE2. Therefore, compared to the process shown in Fig. 2, the initial beam configuration data of the third radio device UE2 (such as a beam codebook) is updated based on abeam preselection process M(A) executed on the third radio device UE2.

In step 40L, the third radio device UE2 and the second radio device gNB communicate in one or more of an uplink, downlink, or duplex communication wherein the radio interface of the third radio device UE2 is configured using the at least one antenna pattern of the beam configuration data (defined by a codebook) obtained as part of the beam training process 40A-40J. The communication quality between the third radio device UE2 and the second radio device gNB will be relatively good adding to the beam training process having discovered a path between the third radio device UE2 and the second radio device gNB having relatively good path loss and/or sensitivity. Communication quality is, for example, a metric comprising one, or a combination of any of channel capacity, data rate, reliability, signal-to-noise-ratio, signal-to-interference-noise-ratio, or similar.

According to an embodiment, the executable beam preselection process further comprises a trained machine learning model. The trained machine learning model is configured to be executed by the processor 20 of the first radio device UE. The processor is configured to apply, specially applies, the trained machine learning model to generate or adapt the initial beam configuration data to form beam configuration data.

As one example, to train the machine learning model a network service N may execute a large number of ray tracing simulations of the environment 102 showing blockers at different locations, for example. For the location of blockers in each ray tracing simulation, an optimal or good beam training strategy is derived in respect of, for example, communication links between the first radio device UE one and a second radio device gNB. A vector comprising the location of blockers, and a vector comprising corresponding beam strategies for each blocker location can then be used to train a machine learning model until a level of convergence has been achieved. In use, environmental sensors provide a blocker location (obtained, for example, using a camera, or digital twin of the environment) to the trained machine learning model. The trained machine learning model outputs the optimal or good beam training strategy for the given blocker location. Thus, the trained machine learning model may be provided from the network service N to the first radio device and / or the second radio device gNB.

According to an embodiment, the executable beam preselection process further comprises a set of source code defining a beam training process configured to be executed by the processor 20 of the first radio device UE. The processor 20 is configured to execute, specially executes the source code to generate or adapt the initial beam configuration data to form beam training data.

For example, the executable beam selection process may comprise source code that designs, or chooses from, one of a number of pre-determined beam training strategies based on the physical form of an environment 102, or the velocity or location of the first radio device UE1.

According to an embodiment, the executable beam preselection process further comprises reading a lookup table configured to be accessed by the processor 20 of the first radio device UE, wherein the processor 20 is configured to apply, specially applies the lookup table to generate or adapt the initial beam configuration data.

According to a second aspect, there is provided a second radio device gNB for communication with at least a first radio device UE1. The second radio device gNB comprises a radio interface 28 configured to transmit and receive radio signals, and a processor 25 configured to transmit beam preselection information and/or computer readable instructions comprising an executable beam preselection process to the first radio device UE1, to receive, from at least the first radio device UE1, data as part of a beam training process between the first UE1 and second gNB radio devices, and to update the beam preselection information and/or computer readable instructions comprising an executable beam preselection process based on the data received as part of the beam training process.

According to an embodiment, the processor 25 of the second radio device gNB is further configured to transmit the updated beam preselection information and/or computer readable instructions comprising an executable beam preselection process to a third device UE2, and to receive, from at least the third radio device UE2, further data as part of a further beam training process between the second and third radio devices.

Fig. 9 schematically illustrates a communication method of a first radio device.

According to a third aspect, there is provided a communication method 50 of a first radio device UE1 for radio communication with at least a second radio device gNB, comprising:
- receiving 52, at the first radio device UE1, beam training data P from the second radio device gNB;
- obtaining 54 beam configuration data of the first radio device UE1 by updating at least one of the records of the initial beam configuration data based on the beam training data received from the second radio device gNB;
- configuring 56 the radio interface 22 to transmit using at least one antenna pattern based on the at least one record of the beam configuration data; and
- performing 58, via the radio interface 22, a beam training process with at least the second radio device gNB, wherein the radio interface is configured using the at least one antenna pattern of the beam configuration data as part of the beam training process.

According to an embodiment, the first radio device UE1 transmits communication data obtained from a higher layer using the using the at least one antenna pattern of the beam configuration data as part of the beam training process.

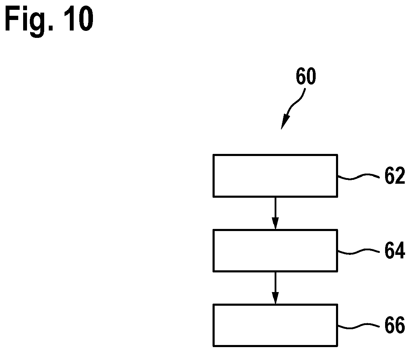

Fig.10 schematically illustrates a communication method of a first radio device.

According to a fourth aspect, there is provided a communication method 60 of a second radio device gNB for radio communication with at least a first radio device gNB, comprising:
- transmitting 62 beam training data P to a first radio device UE1;
- receiving 64, from at least the first radio device UE1, data as part of a beam training process between the first UE1 and second gNB radio devices;
- updating 66 the beam training data as part of the beam training process.

According to a fifth aspect, there is provided a communication system comprising a first radio device UE1 according to the first aspect, or one of its embodiments, and a second radio device gNB according to the second aspect.

According to an embodiment, the communication system comprises a further radio device UE3. The further radio device UE3 is configured to transmit the updated beam preselection information and/or computer readable instructions comprising an executable beam preselection process to the second radio device gNB. The second radio device gNB is configured to receive, from at least the third radio device UE2, further data as part of a further beam training process between the second gNB and further radio devices.

According to a sixth aspect, there is provided a computer program element which, when executed by a processor, is configured to perform the method of the third and/or fourth aspects, or their respective embodiments.

According to a seventh aspect, there is provided a computer readable medium comprising instructions which, when executed by a processor, cause the processor to carry out the method of the second aspect.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

## Claims

1. A first radio device (U E1) for radio communication with at least a second radio device (gNB), comprising:
- a radio interface (22) configured to transmit and receive radio signals via a beamforming antenna arrangement (23), wherein the beamforming antenna arrangement (23) is configurable into a plurality of antenna patterns (*θ*_{*UE*1}*,ϕ*_{*UE*1}), wherein each antenna pattern is defined by corresponding initial beam configuration data (U) comprised in a memory (21) of the first radio device (UE1); and
- a processor (20) configured to:
receive beam training data (P,M) from the second radio device (gNB);
obtain updated beam configuration data of the first radio device (UE1) by updating at least one of the records of the initial beam configuration data (U) based on the beam training data (P,M) received from the second radio device (gNB);
configure the radio interface (22) to transmit using at least one antenna pattern based on the at least one record of the updated beam configuration data; and
perform, via the radio interface (22), a beam training process with at least the second radio device (gNB), wherein the radio interface (22) is configured using the at least one antenna pattern of the updated beam configuration data as part of the beam training process.

2. The first radio device (UE1) according to claim 1, wherein the processor is configured, prior to receiving the beam training data (P, M) from the second radio device (gNB):
- to transmit the initial beam configuration data to the second radio device (gNB) prior to receiving the beam training data (P) at the first radio device (UE1).

3. The first radio device (UE1) according to claim 1, wherein the beam training data (P, M) comprises beam preselection data (P) and/or computer readable instructions comprising an executable beam preselection process (M) from the second radio device (gNB); and the processor (20) is further configured to:
generate the updated beam configuration data by applying the beam preselection data (P) and/or the executable beam preselection process (M) to the initial beam configuration data, and
remove and/or reorder at least one of the corresponding records of the initial beam configuration data based on the beam preselection data (P) and/or the executable beam preselection process (M).

4. The first radio device (UE1) according to claim 3, wherein the beam preselection data (P) further comprises information characterising the environment (102) comprising the first (UE1) and second radio devices (gNB), optionally absolute or relative coverage gradients of the environment, and/or scenario information obtained by the second radio device (gNB).

5. The first radio device (U E1) according to one of claims 3 or 4, wherein the beam preselection data further comprises information characterising the position of the second radio device (gNB) relative to the first radio device (UE1), and/or a velocity between the first (U E1) and second (gNB) radio devices.

6. The first radio device (UE1) according to one of claims 3 to 5, wherein the beam preselection data further comprises information characterising candidate beam configuration data comprising at least one of an absolute or relative beam direction, a beam likelihood, or a beam training sequence.

7. The first radio device (UE1) according to one of claims 3 to 6, wherein the beam preselection information further comprises at least one temporal, spectral, and/or spatial beam selection rule defining a second beam for use at a second time based on the selection of a first beam at a preceding first time.

8. The first radio device (UE1) according to one of claims 3 to 7, wherein the computer readable instructions comprising an executable beam preselection process further comprises at least one of:
- a trained machine learning model configured to be executed by the processor (20), wherein the processor (20) is configured to apply the trained machine learning model to generate or adapt the initial beam configuration data to form the updated beam configuration data; and/or
- a set of source code defining a beam training process configured to be executed by the processor (20), wherein the processor (20) is configured to execute the source code to generate or adapt the initial beam configuration data to form the updated beam training data; and/or
- a lookup table configured to be accessed by the processor (20), wherein the processor (20) is configured to apply the lookup table to generate or adapt the initial beam configuration data.

9. A communication method (50) of a first radio device (UE1) for radio communication with at least a second radio device (gNB), comprising:
- receiving (52), at the first radio device (UE1), beam training data (P,M) from the second radio device (gNB);
- obtaining (54) updated beam configuration data of the first radio device (UE1) by updating at least one of the records of the initial beam configuration data based on the beam training data (P,M) received from the second radio device (gNB);
- configuring (56) the radio interface (22) to transmit using at least one antenna pattern based on the at least one record of the beam configuration data; and
- performing (58), via the radio interface (22), a beam training process with at least the second radio device (gNB), wherein the radio interface (22) is configured using the at least one antenna pattern of the beam configuration data as part of the beam training process.

10. A second radio device (gNB) for communication with at least a first radio device (UE1), comprising:
- a radio interface (28) configured to transmit and receive radio signals; and a processor (25) configured to:
transmit beam training data (P, M) to the first radio device (U E1);
receive, from at least the first radio device (UE1), data as part of a beam training process between the first (UE1) and second (gNB) radio devices; and
update the beam training data based on the data received as part of the beam training process.

11. The second radio device (gNB) according to claim 10, wherein the processor is further configured to:
- transmit the beam training data to a third radio device (U E3); and
- receive, from at least the third radio device (UE2), further data as part of a further beam training process between the second and further radio devices.

12. A communication method (60) of a second radio device (gNB) for radio communication with at least a first radio device (UE1), comprising:
transmitting (62) beam training data comprising an executable beam preselection process to a first radio device (U E1);
receiving (64), from at least the first radio device (U E1), data as part of a beam training process between the first (U E1) and second (gN B) radio devices;
updating (66) the beam training data based on the data received as part of the beam training process.

13. A communication system (100) comprising:
- a first radio device (U E1) according to one of claims 1 to 8; and
- a second radio device (gNB) according to one of claims 10 or 11.

14. The communication system according to claim 13, further comprising:
- a third radio device (UE2);
wherein the third radio device is configured to:
- transmit the beam training data to a third radio device (U E2); and wherein the second (gNB) radio device is configured to:
- receive, from at least the third radio device (UE2), further data as part of a further beam training process between the second and third radio devices.

15. A computer program element which, when executed by a processor, is configured to perform the method of claims 9 or 12.
